(19) **Europäisches Patentamt**

**European Patent Office**

**Office européen des brevets**

(11) **EP 0 660 809 B1**

(12) **FASCICULE DE BREVET EUROPEEN**

(45) Date de publication et mention
de la délivrance du brevet:
**27.10.1999 Bulletin 1999/43**

(21) Numéro de dépôt: **94922885.2**

(22) Date de dépôt: **07.07.1994**

(51) Int. Cl.$^6$: **C03B 23/03**, C03B 23/025,
C03B 23/035

(86) Numéro de dépôt international:
**PCT/FR94/00847**

(87) Numéro de publication internationale:
**WO 95/01938 (19.01.1995 Gazette 1995/04)**

(54) **PROCEDE ET DISPOSITIF DE FORMAGE DE PLAQUES DE VERRE ET APPLICATION DE CE PROCEDE A L'OBTENTION DE VITRAGES DE FORMES COMPLEXES**

VERFAHREN UND VORRICHTUNG ZUM FORMEN VON GLASSCHEIBEN UND ANWENDUNG DIESES VERFAHREN ZUR HERSTELLUNG VON FENSTERN MIT KOMPLEXER FORM

METHOD AND DEVICE FOR SHAPING GLASS SHEETS, AND USE THEREOF FOR PRODUCING GLAZING WITH A COMPLEX SHAPE

(84) Etats contractants désignés:
**BE CH DE ES FR GB IT LI LU PT SE**

(30) Priorité: **09.07.1993 FR 9308455**

(43) Date de publication de la demande:
**05.07.1995 Bulletin 1995/27**

(73) Titulaire: **SAINT-GOBAIN VITRAGE**
**92400 Courbevoie (FR)**

(72) Inventeur: **MORIN, Claude**
**F-92800 Puteaux (FR)**

(74) Mandataire:
**Breton, Jean-Claude et al**
**SAINT-GOBAIN RECHERCHE**
**39, quai Lucien Lefranc**
**93303 Aubervilliers (FR)**

(56) Documents cités:
**EP-A- 0 183 418**     **WO-A-93/06052**
**US-A- 4 778 507**

## Description

La présente invention concerne les techniques de formage de feuilles de verre en vue de la réalisation de vitrages automobiles de sécurité, trempés et/ou assemblés à l'aide de feuilles de matière plastique. Plus précisément, l'invention vise une amélioration des techniques de formage selon lesquelles les feuilles de verre sont chauffées et convoyées en position horizontale au travers d'un four par un convoyeur plan puis sont bombées dans une enceinte thermiquement isolée avant d'être conduites dans un poste de refroidissement.

Les développements récents de l'industrie automobile tendent vers une demande toujours accrue de vitrages de formes complexes, avec en particulier des courbures très prononcées localement et surtout des formes non développables, dérivées de formes sphériques, non cylindriques. Parallèlement, la qualité optique exigée est de plus en plus élevée. De même, une conformité au galbe avec des tolérances étroites est requise pour tous les points de la surface du vitrage et non seulement pour ceux proches de sa périphérie.

Les vitrages de formes complexes sont obtenus essentiellement à l'aide de deux technologies :

* la première, principalement utilisée pour les vitrages assemblés par feuilletage tels les pare-brise, consiste à poser à froid, une ou deux feuilles de verre sur un cadre dont la géométrie périphérique reproduit celle que l'on désire conférer aux feuilles de verre et à chauffer l'ensemble dans un four pour un bombage par gravité ; ces dernières années, pour répondre à la demande de formes de plus en plus complexes, il a été proposé d'opérer un pressage en fin d'opération à l'aide d'une contreforme,
* la seconde, principalement destinée aux vitrages trempés, différencie complètement les étapes de réchauffement des feuilles de verre, chauffées dans un four qu'elles traversent à plat, convoyées par un lit de rouleaux ou un coussin d'air, et les étapes de formage qui s'effectuent à l'aide d'outils n'intervenant sur le verre que lorsque sa température s'y prête.

De ce fait, dans les techniques dites de "trempe", encore que cette terminologie ne doive pas exclure la fabrication de vitrages feuilletés, il y a une réduction considérable du nombre des outils de bombage utilisés et du temps d'immobilisation de ceux-ci pour la fabrication d'un vitrage donné. Compte tenu du très grand nombre de modèles de véhicules automobiles, cette réduction constitue un avantage très important, ne serait-ce que pour les problèmes de gestion du stock d'outils. D'autre part, les temps de cycles sont généralement beaucoup plus courts avec les techniques de "trempe".

Une difficulté immédiate de ces techniques de "trempe" opérant avec des outils, statiques en ce sens qu'ils ne quittent pas la cellule de formage, est qu'elles impliquent des transferts de feuilles de verre, du convoyeur à un premier outil de formage puis dans le cas des formes complexes, de ce premier outil à un outil complémentaire de formage, coopérant généralement avec le premier, et enfin à un outil de support lors du refroidissement. Toutes ces opérations peuvent affecter la qualité du vitrage car elles entraînent des risques de marquage et de mauvais positionnements qui se traduisent en fin de compte par une mauvaise qualité optique et/ou une non-conformité au galbe.

D'autre part, nombre des procédés dits de trempe sont en fait une course contre le temps : pour une plus grande maîtrise du positionnement des outils, il est en effet plus simple de les placer à l'air libre, hors du four. Dans ces conditions, il est évident que le verre se refroidit au cours de son bombage. Or, l'étape de trempe requiert une température minimale qui impose de surchauffer le verre dans le four (mais alors la qualité optique en est nécessairement affectée) et/ou de procéder très rapidement au bombage, ce qui n'est possible, que si la forme recherchée est simple. Il a certes été proposé de préformer les vitrages avant de les conduire à un poste de bombage par pressage entre une forme mâle pleine et une forme femelle, le préformage étant obtenu en faisant défiler le verre en fin de four sur des éléments tournants en forme tels que rouleaux du type fusées ou diabolos ou encore tels que des guidons. Mais il faut savoir que ces éléments sont euxmêmes une source importante de défauts et qu'il est pratiquement impossible de positionner correctement le verre en mouvement sur de tels éléments. Un positionnement avant l'entrée dans la zone de préformage est bien sûr toujours possible mais son efficacité est toute relative et dépend là encore de la complexité de la forme souhaitée, une forme 《simple》 étant beaucoup plus 《tolérante》 à l'égard de la qualité du positionnement. Par ailleurs, le préformage dû à des éléments tournants est cylindrique, or nous avons indiqué plus haut, que les formes les plus complexes sont sphériques, avec localement des rayons de courbure longitudinaux et transversaux petits. Un préformage cylindrique permet d'approcher un seul de ces rayons de courbure.

A ces technologies à froid, s'opposent des technologies à chaud dans lesquelles la cellule de formage fait partie intégrante du four ou du moins est isolée thermiquement de façon à y maintenir une température sensiblement identique à la température du verre à sa sortie de four. Il est alors possible d'allonger (de quelques secondes), le temps consacré au formage ce qui permet d'une part de minimiser la température en sortie de four et d'autre part, de conférer des bombages plus prononcés en ayant des temps de relaxation suffisants pour éviter que le vitrage ne se brise.

Le document EP-A-0 183 418 décrit une technologie à chaud selon laquelle une feuille de verre est bombée en deux étapes dans deux postes de travail différents, la feuille de verre étant déplacée horizontalement d'un poste vers l'autre. La première étape étant une déformation par gravité sur une forme inférieure et la seconde un pressage entre deux formes. Ce document décrit également que dans le cas de la réalisation de formes non développables, la forme inférieure, sur laquelle la déformation par gravité est obtenue, est une forme pleine.

Dans les variantes classiques de ces technologies, le verre est transféré du convoyeur à une forme mâle dont il épouse la forme sous l'effet d'une pression (EP-A-3 391, EP-A-241 355), d'un courant d'air chaud ascendant (EP-A-169 770), ou de la gravité (WO-A-91/17962). Après ce préformage au contact de la forme mâle, le bombage est complété à l'aide d'un cadre annulaire ouvert en son centre utilisé en cas de pressage à titre de contreforme femelle ou plus simplement à titre de support lors d'un bombage dû à la chute sur ce cadre annulaire ("drop forming"). Dans les deux premiers cas, la force agissant lors du préfor-mage est également utilisée pour le transfert convoyeur / forme mâle. Dans le dernier cas, un plateau-ventouse prend en charge le volume pour le déposer sur une forme convexe inférieure, à concavité tournée vers le bas.

Tous ces procédés ont en commun un préformage opéré au moyen d'une forme mâle pleine contre laquelle est appliquée la totalité de la surface de la feuille de verre plane, à l'exception éventuelle d'une petite portion marginale. En pratique, il en est de même lorsque le transfert convoyeur / forme mâle est effectué à l'aide d'un cadre annulaire comme il a été proposé dans les demandes de brevets européens EP-A-520 886 et EP-A-587 620, cette dernière n'étant pas publiée à la date du dépôt de la présente demande. En effet, dans ces procédés, le séjour de la feuille de verre sur le cadre annulaire est le plus rapide possible, les différentes étapes pouvant s'énoncer comme dans les cas précédentes dans l'ordre : transfert / préformage sur la forme mâle / bombage par pressage avec le cadre annulaire.

Les auteurs de la présente invention ont constaté que cette manière de procéder ne donne pas pleinement satisfaction lorsque les formes de vitrages sont complexes et présentent notamment un critère de non-développabilité localement supérieur à 5, ledit critère de développabilité étant défini par la formule $D = Ln(10^7 / R_1 \times R_2)$ où Ln désigne le logarithme népérien, $R_1$ et $R_2$ étant égaux aux rayons de courbures principaux au point considéré (exprimés en millimètres). A noter que cette formule souligne bien que les problèmes de formage se posent lorsque à la fois $R_1$ et $R_2$ sont petits.

La difficulté principale rencontrée est la formation d'ondulations marginales, à l'instar de ce que tout à chacun peut observer en tentant de recouvrir une sphère à l'aide d'une feuille de papier sur les bords, il y a toujours trop de papier d'où nécessité de former des plis, autrement dit des ondulations.

Les auteurs de la présente invention ont trouvé que ce problème peut être résolu par un procédé de bombage selon des formes non développables d'une plaque de verre chauffée à température de bombage dans un four horizontal qu'elle traverse véhiculée par un convoyeur plan qui la conduit dans une cellule de bombage où est maintenue une température ambiante sensiblement identique à la température de bombage, dans laquelle est disposée une forme mâle pleine convexe en direction de laquelle la plaque de verre est déplacée verticalement au moyen d'une contreforme annulaire concave disposée à demeure dans la cellule de bombage, pour être pressée entre la forme mâle et la contreforme femelle, le contact entre le verre et la forme mâle n'étant opéré qu'après une phase d'ébauchage par formage par gravité sur la contreforme annulaire, au sein de la cellule de bombage.

Par plaque de verre, il est entendu selon l'invention une feuille de verre ou éventuellement une pile de deux, trois feuilles de verre superposées dès l'entrée du four comme il sera détaillé plus loin.

Le procédé selon l'invention prévoit ainsi la formation d'une ébauche avant la phase de pressage, ladite ébauche étant bombée sphériquement. Dans la phase d'ébauchage, la partie centrale du vitrage est avantageusement libre de tout contact avec un outil ce qui permet au verre de fluer librement et de compenser la non développabilité de la forme imposée par la forme mâle par des amincissements locaux.

Dans une variante plus particulièrement préférée de l'invention, entre la phase d'ébauchage et la phase de pressage, il est prévu une phase de préformage au cours de laquelle la plaque de verre est appliquée contre la forme mâle par des forces de nature purement pneumatique. Au cours de cette phase de préformage, la partie centrale de la plaque de verre est en contact avec la forme mâle et de ce fait, ne peut plus être étirée. Néanmoins, une portion notable de la surface de la plaque de verre est encore libre de tout contact avec les outils de formage de sorte que le verre peut encore se déformer de façon à envelopper la forme mâle.

Le procédé de formage selon l'invention consiste ainsi successivement dans la formation d'une ébauche, la reprise de cette ébauche par la forme mâle pleine et une finition par pressage. Un tel procédé en trois étapes ne peut bien sûr se concevoir que dans le cadre d'une technologie à chaud, où le verre est dans une enceinte sensiblement isotherme, de même que les outils de bombage qui y séjournent de façon permanente, de sorte qu'il n'y a normalement pas d'échange thermique parasite qui perturbe l'optique.

En procédant selon l'invention, on crée une ébauche ayant elle-même une forme non développable. Lors de la phase d'ébauchage, la partie centrale de la feuille de verre est avantageusement libre de tout contact ; du fait de l'action des forces de gravité, il va ainsi pouvoir se créer dans cette partie centrale des contraintes d'extension qui conduisent à une élongation de cette partie centrale (ce qui se traduit localement par un léger amincissement du verre). En même temps, la matière proche des bords peut fluer en direction de la partie centrale. Les ondulations indésirées ne se forment pas lors du pressage contre la forme mâle, la déformation que doit encore subir la périphérie de la feuille de verre est très faible et il n'y a alors plus d'"'excédent" de verre.

Avec les procédés connus de l'art, la partie centrale de la feuille est celle qui nécessairement, rencontre la forme de bombage mâle en premier lieu. Dès que ce contact est établi, il n'est plus possible d'allonger la partie centrale de sorte que la périphérie du vitrage ne peut venir envelopper totalement la forme mâle, le fluage de la matière ne peut jouer que sur une portion périphérique marginale ce qui ne permet pas une véritable compensation, de sorte que les ondulations se forment.

Avantageusement, le procédé selon l'invention aboutit à un traitement plus uniforme de toute la surface de la feuille de verre car la partie centrale est en contact avec la forme mâle pendant une durée sensiblement identique à celle du reste de la feuille de verre, la distance à parcourir pour atteindre la forme mâle étant, en raison de l'étape d'ébauchage par gravité, approximativement la même pour tous les points de la surface de la plaque de verre. Il en résulte une amélioration de la qualité optique.

Par certains aspects, le procédé selon l'invention s'apparente aux procédés de formage utilisés habituellement pour la production de vitrages feuilletés. Néanmoins, il doit bien être souligné qu'il s'agit bien là d'un procédé dit de trempe où le verre entre dans la cellule de bombage plat et à la température de bombage, un outil unique étant utilisé pour traiter tous les volumes. D'autre part, le procédé selon l'invention permet de transférer le verre, après bombage, à un cadre de trempe.

Pour la mise en oeuvre du procédé selon l'invention, il peut être par exemple utiliser une installation de bombage telle que celle décrite dans la demande de brevet précitée EP-A-520 886 et qui comporte un four horizontal terminé par une cellule de bombage, où est maintenue une température voisine de la température de bombage de la feuille de verre, cette cellule de bombage comportant un organe de soutien du verre dans le prolongement du plan du transport de la feuille de verre - de préférence du type coussin d'air - , une forme mâle pleine à convexité tournée vers le bas, disposée au-dessus dudit organe de soutien, une contreforme annulaire concave, formée d'un cadre continu ouvert en son centre, déplacable entre une position basse sous ledit plan de transport et une position haute au voisinage de la forme mâle et des moyens de déplacement de la forme annulaire entre sa position haute et sa position basse avec lesquels la vitesse de déplacement vertical de la contre-forme annulaire peut être entièrement contrôlée, sur la totalité de la distance de déplacement vertical, ainsi pouvant obtenir et définir la déformation par gravité de la plaque de verre sur la contreforme annulaire. De manière préférée, l'organe de soutien est solidaire d'un ensemble comportant une platine montée sous la cellule de bombage, hors de l'enceinte isolée thermiquement, portant outre cet organe de soutien, le plancher isolant de la cellule de bombage et la contreforme annulaire, les moyens de contrôle de la vitesse de déplacement de la forme annulaire étant constitués par un système de pilotage de l'ensemble de motorisation de la contreforme annulaire.

Une telle installation peut être utilisée pour l'obtention de vitrages trempés thermiquement, à condition bien sûr de lui adjoindre un poste de trempe et des moyens pour transférer les vitrages bombés de la cellule de bombage au poste de trempe. Elle peut être également utilisée pour le bombage simultané de plusieurs feuilles de verre qui sont alors superposées les unes sur les autres (en général par paires) à l'entrée du four, la pile étant soulevée par la contreforme annulaire, amenée au contact de la forme mâle après un temps suffisant pour permettre l'ébauchage, plaquée contre la forme mâle par une dépression créée à la périphérie de la feuille de verre puis pressée contre la forme mâle à l'aide de la contreforme annulaire. Après ce passage, les feuilles de verre sont maintenues quelques instants au contact de la forme mâle, le temps d'abaisser la contreforme inférieure et d'introduire sous la forme mâle un cadre de récupération qui transfère les feuilles de verre dans un poste de refroidissement contrôlé. Le procédé selon l'invention a ceci de remarquable qu'aucune modification réelle de l'installation (à l'exception du changement des outils de bombage pour s'adapter à la forme désirée) n'est nécessaire pour passer d'une production à une autre, seuls les temps de cycle consacrés à la montée du cadre annulaire et au pressage sont à moduler pour transformer une installation pour vitrages trempés en une installation pour vitrages feuilletés. Il s'applique notamment à la réalisation de vitrages présentant localement un critère de non développabilité supérieur à 5, vitrages qui ne peuvent pas être obtenus avec une bonne qualité optique et une grande précision du galbe avec les procédés connus de l'art.

D'autres détails et caractéristiques avantageuses de l'invention ressortent de la description faite ci-après en référence aux dessins annexés qui représentent :

* **figures 1 à 4** : une vue schématique de côté d'un formage conformément au procédé selon l'invention d'une paire de feuilles de verre,
* **figure 5** : une représentation schématique d'un vitrage présentant un critère de non-développabilité atteint la valeur 5, avec un maillage vu en élévation (figure 5.1), de face (figure 5.2) et de trois quart (figure 5.3),
* **figure 6** : la vue d'une mire réfléchie par le vitrage de la figure 5.

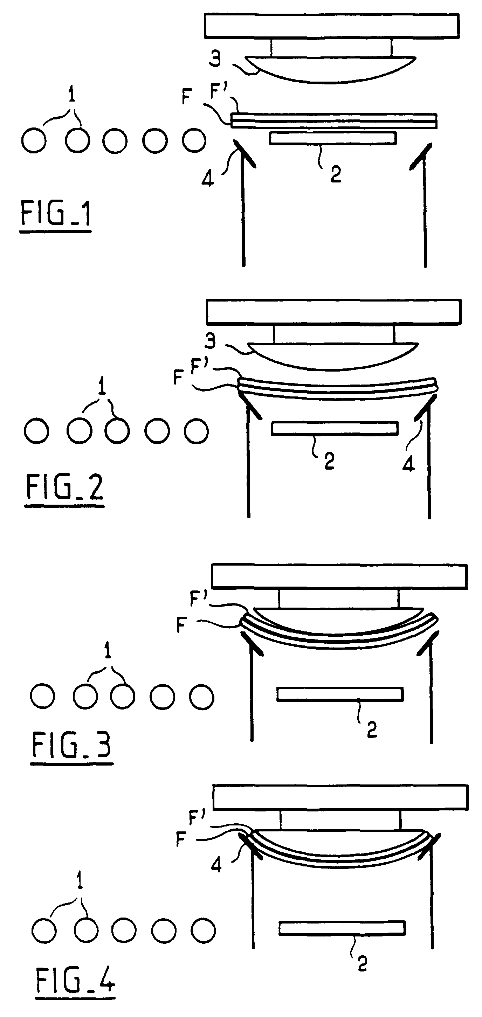

Quelques unes des singularités du procédé selon l'invention sont expliquées ci-après en référence aux figures 1 à 4 qui illustrent la mise en oeuvre de l'invention avec une installation analogue à celle décrite dans la demande de brevet EP-520 886 dont le contenu doit être considéré comme ici incorporé et à laquelle il est renvoyé pour plus de précisions quant aux détails de réalisation.

Une telle installation comporte un four de réchauffage avec un convoyeur de préférence constitué par un lit plan de rouleaux 1. A la sortie du four, les feuilles de verre, à une température de l'ordre de 650°C si elles doivent subir une opération de trempe thermique, ou de l'ordre de 550°C s'il s'agit de la préparation d'un vitrage feuilleté, pénétrant dans la cellule de bombage où elles sont alors prises en charge par un organe de soutien, tel que par exemple un coussin d'air chaud, ici symbolisé par un caisson 2. Pour la réalisation de ce dernier, il est de préférence un caisson comportant une pluralité de compartiments individuels transversaux par rapport à l'axe du convoyeur ; ce type de coussin d'air permettant d'éviter le déséquilibrage du coussin au moment de l'arrivée du vitrage, lorsque seul le bord avant de celui-ci est à la verticale du coussin d'air. Pour plus de détails sur un tel compartimentage il est renvoyé par exemple à la demande de brevet français 92/08482 déposée le 9 juillet 1992.

Cette cellule de bombage, enceinte isolée thermiquement, comprend de plus une forme mâle convexe 3, munie de moyens propres à maintenir à son contact une feuille de verre et une contreforme annulaire concave 4 déplacée entre une position basse sous le plan de convoyage des feuilles de verre et une position haute au voisinage de la forme mâle. Forme et contreforme sont référencées l'une par rapport à l'autre et ne se déplacent que selon la verticale.

En même temps que le verre pénètre dans la cellule de bombage, il est positionné par un jeu de butées de focalisation, placées de plus en plus rapprochées dans la direction d'avancement de la feuille de verre. Dans le cas où l'on traite non une mais plusieurs notamment deux feuilles de verre superposées F, F', en interposant entre elles un agent de séparation par exemple du type poudre de Kieselguhr, ces butées sont de préférence des butées tronconiques, d'un diamètre plus grand en haut qu'en bas, de manière à positionner non seulement la feuille de verre inférieure mais aussi la feuille de dessus qui, destinée à former le côté concave du vitrage feuilleté, est normalement légèrement plus petite que la feuille inférieure, côté convexe. De préférence encore, ces butées sont escamotables.

Comme enseigné dans la demande de brevet européenne EP-520 886, les butées de focalisation sont de préférence en référence par rapport à la forme supérieure mâle, elle-même référencée par rapport à la contreforme annulaire, toutes ces pièces étant obtenues avec une précision d'usinage élevée et étant de préférence réalisée à partir de pièce coulée en fonte ou en acier réfractaire.

Dès que la ou les feuille(s) de verre est/sont correctement focalisée(s), le cadre annulaire est soulevé par exemple au moyen de vérins à vis motorisée, lesdites vis étant de préférence placée hors de l'enceinte isolée thermiquement. Conformément à l'invention, la course de ces vérins à vis est entièrement contrôlée, sur toute leur longueur et non seulement à l'approche de la forme mâle. A titre purement indicatif, en vue de la réalisation d'un vitrage présentant un fort critère de non-développabilité, on a été amené à utiliser les paramètres suivants : la montée de la contreforme annulaire 4s, préformage par la forme pleine 2s, pressage avec la contreforme annulaire 1s. Il est aussi possible de prévoir un temps d'arrêt par exemple à mi-hauteur, et d'opérer des mouvements à grande vitesse comme précédemment. Il va de soi que ces temps peuvent différer d'un vitrage à l'autre en fonction notamment de la complexité de la forme à réaliser mais aussi de paramètres tels que la température de sortie de four ou l'épaisseur des feuilles de verre, mais, il importe de noter que la montée peut atteindre une durée sensiblement équivalente à la durée pendant laquelle la feuille de verre est en contact avec la forme mâle.

Pendant cette montée, et comme représenté à la figure 2, le verre s'effondre sur la contreforme annulaire sous l'effet de la force de gravité, en étant exempt de tout contact avec un outil - à l'exception de la portion marginale en contact avec la contreforme annulaire.

Dès que la contreforme annulaire a achevé sa montée, et que l'ébauche est constituée, la ou les feuilles de verre sont aspirées par une dépression créée à la périphérie de la forme mâle. De ce fait, le verre décolle légèrement du cadre annulaire (figure 3) et vient se plaquer contre la surface convexe de la forme mâle. A ce stade du procédé, opérer sur une ébauche conformément à l'invention et non sur une feuille de verre plan présente au moins deux avantages : le premier est que la distance à parcourir par tous les points de la feuille de verre est sensiblement identique, le second est que le contact entre la partie centrale de la feuille de verre et la contreforme mâle est beaucoup moins brutal : le préformage peut être assimilé plus à une opération de marouflage qu'à une opération de poinçonnage comme c'est parfois le cas avec les procédés connus de l'art. Grâce à ce contact plus doux, la qualité optique du verre est encore améliorée.

La dernière étape représentée à la figure 4 est l'étape de pressage au moyen de la contreforme annulaire. Avec le procédé selon l'invention, il s'agit simplement d'une simple étape de finition pour parfaire la géométrie des bords, qui ne vise pas à créer des contraintes de compression en vue de compenser l'excédent de matière, celui-ci ayant été déjà "absorbé" par le fluage qui s'opère lors de l'ébauchage. De ce fait, les taux de casse sont moindres, ne serait-ce que, car les risques de générer des contraintes résiduelles sont diminuées, le vitrage étant déjà très proche de sa forme définitive et les risques de marquage optique sont également moindres.

A la suite de l'opération de pressage, la ou les feuilles de verre sont maintenues au contact de la forme mâle le temps d'abaisser la contreforme annulaire sous le plan de convoyage du verre plan et d'introduire sous la forme mâle un cadre de récupération de la ou des feuilles de verre bombées. Selon les cas, ce cadre conduit le vitrage bombé dans un poste de refroidissement contrôlé, par exemple par un poste de refroidissement radiatif ou dans un poste de trempe, le cadre de récupération étant dans ce dernier cas, adapté à l'évacuation de l'air de trempe.

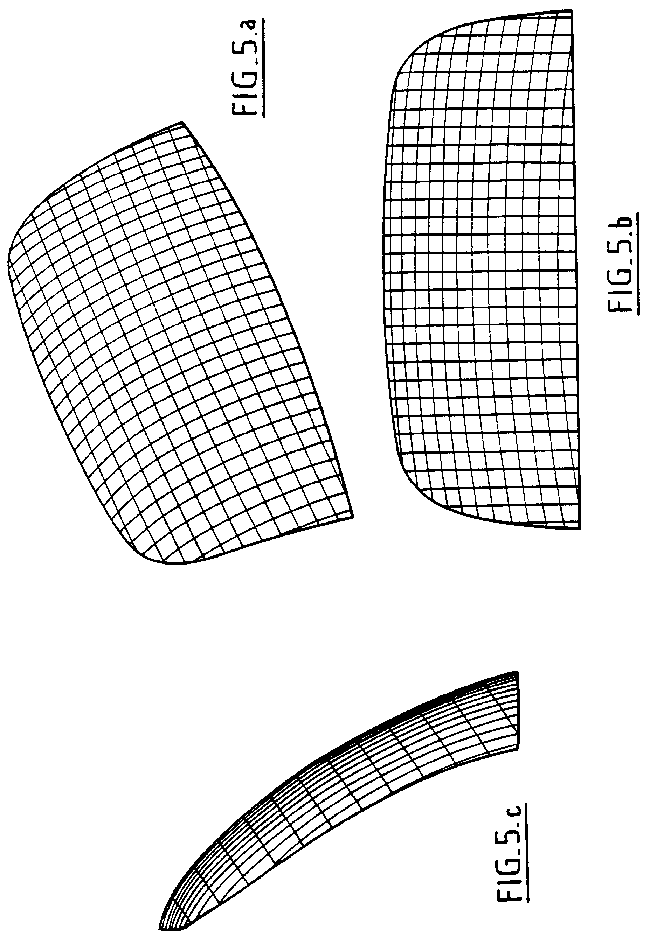

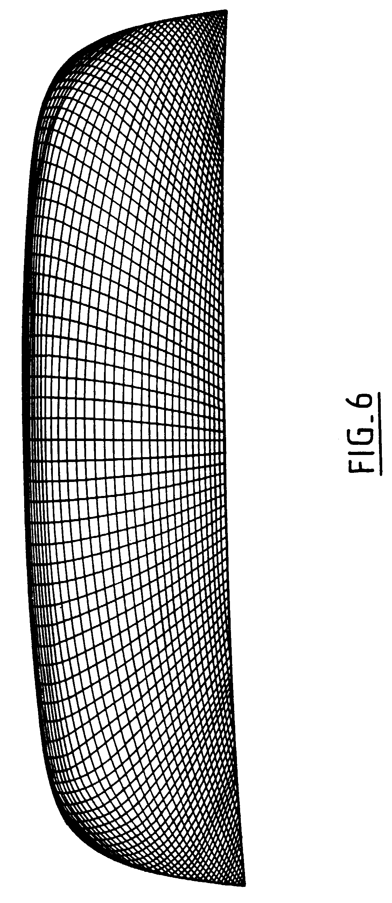

La figure 5 représente une forme de vitrage dont le critère de développabilité est localement supérieur à 5, notamment en raison d'une très forte courbe près des ailes. Avec le procédé selon l'invention, cette forme peut être réalisée avec une excellente qualité optique comme le montre la figure 6 où est reprise l'image réelle de la réflexion d'une mire quadrillée projetée sur un vitrage obtenu selon l'invention incliné à 45°, correspondant à la forme théorique de la figure 5. La déformation de la mire est particulièrement faible.

## Revendications

1. Procédé de bombage selon des formes non développables d'une plaque de verre chauffée à température de bombage dans un four horizontal qu'elle traverse véhiculée par un convoyeur plan qui la conduit dans une cellule de bombage, où est maintenue une température ambiante sensiblement identique à la température de bombage, et dans laquelle est disposée une forme mâle pleine convexe en direction de laquelle la plaque de verre est déplacée verticalement, au moyen d'une contreforme femelle annulaire concave, disposée à demeure dans la cellule de bombage, pour être pressée entre la forme mâle et la contreforme femelle, caractérisé en ce qu'il est prévu au sein de la cellule de bombage, une phase d'ébauchage par formage par gravité sur la contreforme annulaire avant que le verre ne vienne au contact de la forme mâle convexe.

2. Procédé de bombage selon la revendication 1, caractérisé en ce qu'entre la phase d'ébauchage et la phase de pressage, il est prévu une phase de préformage au cours de laquelle la plaque de verre est appliquée contre la forme mâle par des forces de nature purement pneumatique.

3. Procédé de bombage selon l'une des revendications précédentes, caractérisé en ce que la plaque de verre est maintenue au contact de la forme mâle après la phase de pressage et éventuellement pendant la phase de préformage par aspiration.

4. Procédé de bombage selon la revendication 3, caractérisé en ce que ladite aspiration est obtenue par une dépression créée au voisinage de la périphérie de la forme mâle.

5. Procédé de bombage selon l'une des revendications précédentes, caractérisé en ce que ladite plaque de verre est constituée par une pile de plusieurs, notamment deux, feuilles de verre superposées à l'entrée du four.

6. Procédé de bombage selon l'une des revendications précédentes, caractérisé en ce que pénétrant dans la cellule de bombage, la plaque de verre vient s'immobiliser sur un moyen de supportage de sa partie centrale, ledit moyen étant entouré par la contreforme annulaire.

7. Procédé de bombage selon la revendication 6, caractérisé en ce que ledit moyen de supportage est un coussin d'air chaud.

8. Application du procédé selon l'une des revendications précédentes à la réalisation de vitrages présentant localement un critère de non-développabilité supérieur à 5.

9. Dispositif de bombage pour la mise en oeuvre du procédé selon l'une des revendications 1 à 7, constitué par un four horizontal, une cellule de bombage, où est maintenue une température voisine de la température de bombage de la feuille de verre, comportant un organe de soutien du verre dans le prolongement du plan de transport de la feuille de verre, une forme mâle pleine convexe, une contreforme annulaire concave, déplacable entre une position haute au voisinage de la forme mâle et une position basse sous ledit plan de transport et des moyens de déplacement vertical de la contreforme annulaire avec lesquels la vitesse de déplacement vertical de la contreforme annulaire peut être entièrement contrôlée, sur la totalité de la distance de déplacement vertical, ainsi pouvant obtenir et définir la déformation par gravité de la plaque de verre sur la contreforme annulaire.

10. Dispositif de bombage selon la revendication 9, caractérisé en ce que lesdits moyens de déplacement vertical de la contreforme annulaire comprennent des vis motorisées, disposées hors de l'enceinte isolée thermiquement.

## Claims

1. Method of bending, in shapes incapable of development, a plate of glass heated to bending temperature in a horizontal furnace which it passes through conveyed by a flat conveyor which conducts it into a bending cell, where an ambient temperature substantially identical to the bending temperature is maintained, and in which there is disposed a convex solid male form in the direction of which the glass plate is moved vertically, by means of a concave annular female counter-form, permanently disposed in the bending cell, in order to be pressed between the male form and the female counter-form, characterised in that there is provided, within the bending cell, a phase of rough-pressing by gravity-forming on the annular counter-form before the glass comes into contact with the convex male form.

2. Bending method according to Claim 1, characterised in that, between the rough-pressing phase and the pressing phase, a preforming phase is provided during which the glass plate is applied against the male form by forces of a purely pneumatic nature.

3. Bending method according to one of the preceding claims, characterised in that the glass plate is held in contact with the male form after the pressing phase and optionally during the preforming phase by suction.

4. Bending method according to Claim 3, characterised in that the said suction is obtained by a negative pressure created in the vicinity of the periphery of the male form.

5. Bending method according to one of the preceding claims, characterised in that the said glass plate consists of a stack of several, notably two, glass sheets placed one on top of the other at the entry to the furnace.

6. Bending method according to one of the preceding claims, characterised in that, entering the bending cell, the glass plate is immobilised on a means of supporting its central part, the said means being surrounded by the annular counter-form.

7. Bending method according to Claim 6, characterised in that the said supporting means is a cushion of hot air.

8. Application of the method according to one of the preceding claims to the production of glazing panes having locally a non-developability criterion greater than 5.

9. Bending device for implementing the method according to Claims 1 to 7, consisting of a horizontal furnace, a bending cell, where a temperature close to the bending temperature of the sheet of glass is maintained, having a glass support member in line with the transportation plane of the glass sheet, a convex solid male form, a concave annular counter-form, movable between a high position in the vicinity of the male form and a low position below the said transportation plane, and means for the vertical movement of the annular counter-form with which the speed of vertical movement of the annular counter-form can be entirely controlled, over the entire distance of vertical movement, thus being able to obtain and define the gravity deformation of the glass plate on the annular counter-form.

10. Bending device according to Claim 9, characterised in that the said means of vertical movement of the annular counter-form comprise motorised screws, disposed outside the thermally insulated chamber.

**Patentansprüche**

1. Verfahren zum Biegen einer auf Biegetemperatur erhitzten Glasplatte gemäß nicht abwickelbarer Formen in einem Horizontalofen, welchen sie, transportiert von einem ebenen Förderer, durchläuft, der sie in eine Biegezelle bringt, worin eine im wesentlichen gleich der Biegetemperatur seiende Umgebungstemperatur aufrechterhalten wird und eine konvexe Patrizenvollform angeordnet ist, in deren Richtung die Glasplatte mittels einer konkaven ringförmigen Matrizengegenform, die vorgesehen ist, in der Biegezelle zu verbleiben, vertikal bewegt wird, um zwischen Patrizenform und Matrizengegenform gepreßt zu werden, **dadurch gekennzeichnet, daß** in der Biegezelle eine Vorverformungsphase mittels Formgebung durch die Schwerkraft auf der ringförmigen Gegenform vorgesehen ist, bevor das Glas mit der konvexen Patrizenform in Kontakt kommt.

2. Biegeverfahren nach Anspruch 1, **dadurch gekennzeichnet, daß** zwischen der Vorverformungsphase und der Preßphase eine Vorformgebungsphase vorgesehen ist, in deren Verlauf die Glasplatte durch rein pneumatische Kräfte an die Patrizenform angelegt wird.

3. Biegeverfahren nach einem der vorhergehenden Ansprüche **dadurchgekennzeichnet, daß** die Glasplatte nach der Preßphase und gegebenenfalls während der Vorformgebungsphase durch Saugkräfte in Kontakt mit der Patrizenform gehalten wird.

4. Biegeverfahren nach Anspruch 3, **dadurchgekennzeichnet, daß** die Saugkräfte durch einen in der Nähe des Umfangs der Patrizenform geschaffenen Unterdruck erzeugt werden.

5. Biegeverfahren nach einem der vorhergehenden Ansprüche, **dadurch gekennzeichnet, daß** die Glasplatte durch einen Aufbau aus mehreren und insbesondere zwei Glasscheiben gebildet ist, die am Ofeneingang übereinander gelegt worden sind.

6. Biegeverfahren nach einem der vorhergehenden Ansprüche, **dadurch gekennzeichnet, daß** die Glasplatte beim Eintritt in die Biegezelle auf einem Mittel zum Abstützen ihres zentralen Bereichs arretiert wird, das von der ringförmigen Gegenform umgeben ist.

7. Biegeverfahren nach Anspruch 6, **dadurch gekennzeichnet, daß** das Abstützmittel ein Heißluftkissen ist.

8. Anwendung des Verfahrens nach einem der vorhergehenden Ansprüche auf die Herstellung von Verglasungen, die lokal ein Nichtabwickelbarkeitskriterium von größer als 5 aufweisen.

9. Biegevorrichtung für die Durchführung des Verfahrens nach einem der Ansprüche 1 bis 7, die aus einem Horizontalofen und einer Biegezelle besteht, worin eine Temperatur in der Nähe der Biegetemperatur der Glasscheibe aufrechterhalten wird und welche ein Mittel zum Abstützen der Glasscheibe in Verlängerung von deren Transportebene, eine konvexe Patrizenvollform, eine konkave ringförmige Gegenform, die zwischen einer oberen Position in der Nähe der Patrizenform und einer unteren Position unterhalb der Transportebene beweglich ist, und Mittel zur vertikalen Bewegung der ringförmigen Gegenform enthält, mit denen die vertikale Bewegungsgeschwindigkeit der ringförmigen Gegenform über die gesamte Entfernung der vertikalen Bewegung vollständig gesteuert und damit die Verformung der Glasplatte durch Schwerkraft auf der ringförmigen Gegenform erhalten und definiert werden kann.

10. Biegevorrichtung nach Anspruch 9, **dadurch gekennzeichnet, daß** die Mittel zur vertikalen Bewegung der ringförmigen Gegenform motorgetriebene Schrauben umfassen, die außerhalb des wärmegedämmten Behälters angeordnet sind.

FIG_1

FIG_2

FIG_3

FIG_4

FIG_5.a

FIG.5.b

FIG.5.c

FIG.6